# EUROPEAN PATENT SPECIFICATION

(11) **EP 3 183 911 B1**
(45) Date of publication and mention of the grant of the patent: **25.03.2020**
(21) Application number: 14792867.5
(22) Date of filing: 21.08.2014
(51) Int. Cl.: H04W 48/06

(54) **ACCESS CONTROL FOR CONNECTED NETWORK USER DEVICES**
ZUGANGSKONTROLLE FÜR VERBUNDENE NETZWERKBENUTZERVORRICHTUNGEN
CONTRÔLE D'ACCÈS POUR DISPOSITIFS UTILISATEUR DE RÉSEAU CONNECTÉ

(43) Date of publication of application: 28.06.2017
(73) Proprietor: Telefonaktiebolaget LM Ericsson (publ), 164 83 Stockholm (SE)
(72) Inventor: PAREDES CABRERA, Ricardo, Ottawa, Ontario K2M 2H3 (CA); CHAN, Jayson, Kanata, Ontario K2M 2Y3 (CA); HU Z., Bing, Kanata, Ontario K2M 3A1 (CA)
(74) Representative: Ericsson
(86) International application number: PCT/IB2014/064015
(87) International publication number: WO 2016/027133

(56) References cited:
- WO-A1-2012/013355
- GB-A- 2 443 233
- US-A1- 2011 171 929

## Description

### Field of the Disclosure

The present disclosure relates to access control in data communication and in particular to access control for network user devices which are already connected to the network but require additional services.

### Background

In a data communications network, user devices gain access to the network by establishing connections with one or more network access nodes within the network. The establishment of connections to the network access nodes involves performing an admission or access control procedure. As a result of the admission control procedure being performed, a connection may be established, in which case the user device becomes "connected" to the network, or a connection may not be established, due to various factors, in which case the user device remains "disconnected".

Many current user devices are capable of providing a plurality of services. As an example, mobile cellular devices may provide different types of services including multimedia, telephony voice and video. However, when a user device requests a connection to a network, such a connection is generally requested for only one service. Nonetheless, once a connection is established between the user device and the network, the already connected user device may make additional service requests to the network, for services other than those for which the initial connection was established. Such additional requests may be made regardless of the ability of the network to complete processing operations associated with these service requests. Among others, additional requests can be made regardless of the congestion level of the network access node(s) through which the user device has connected to the network. Depending on the network type and network environment at the time the additional service requests are made, various network resources are used in processing these additional service requests.

For current 3rd Generation Partnership Project (3GPP) Long Term Evolution (LTE) cellular networks, the level of network resources used to process additional service requests from user devices (generally referred to as User Equipment) that are already connected to the network can be significant.
There is a need in the art of communication networks and in particular of cellular networks such as LTE to improve the level of network resources used for processing additional service requests from a connected user.

Document GB 2,443,233 A may be construed to disclose an access class barring arrangement for controlling load within a mobile radio communications network by signalling restriction parameters from the network to user equipment. The restriction parameters include application and procedure class data in addition to access class, so as to allow restricted use of the user equipment within otherwise barred access classes.

Document WO 2012/013355 A1 may be construed to disclose a method and a program for selective access control to shared resources in a cellular mobile network. It enables the protection of the network in case of overload situations and is applicable to any cellular mobile network like, GERAN, UTRAN, LTE / E-UTRAN, LTE-Advanced, cdma2000, WiMAX, WiBro™ etc., wherein on a per connection or preferably on a per application or subscription base the access toward a shared medium can be controlled by the operator in order to handle high load or overload situation, while maintaining service operation. The basic principle is the configuration of individual access barring scaling factors and or access barring time scaling factors or individual access barring times on a per terminal basis in order to differentiate terminals or service classes or applications during access to a shared medium.

Document US 2011/171929 A1 may be construed to disclose a wireless communication base station comprising a system information generating unit that generates system information including a several system information messages, a paging message generating unit that generates a paging message including a modification flag that indicates whether or not the system information has been modified; and a transmitter that transmits the system information and the paging message. The system information generating unit generates system information including a system information message in which an emergency message is described, and the paging message generating unit generates a paging message that further includes information indicating that the emergency message is present in the system information and an identifier that identifies a system information message in which the emergency message is described.

### Summary

Those skilled in the art will appreciate the scope of the appended claims and realize additional aspects thereof after reading the following detailed description of the embodiments in association with the accompanying drawing figures.

According to the disclosure, there are provided an apparatus, a method, a computer program and a carrier according to the independent claims. Developments are set forth in the dependent claims.

In one embodiment, a method of operation of a wireless device connected to a radio access node in a cellular communications network, where the connection is established with respect to a first service, is provided. The method comprises receiving a new service request and performing an access control procedure for the service request. Performing the access control procedure comprises reading from the network one or more access control parameters associated with the status of the network and either allowing or barring a new connection for the new service depending on the status of the network.

In one embodiment, the one or more access control parameters comprise parameters indicating a congestion level of the radio access node.

In one embodiment, the method further comprises storing said access control parameters. In one embodiment, the reading and storing of the one or more access control parameters occurs periodically and wherein updated access control parameters are stored subsequent to each periodic reading. In another embodiment, the reading of the one or more access control parameters is subsequent to receiving a new service request. In one embodiment, the reading of the one or more access control parameters comprises selecting a set of access control parameters specific to the new service.

In one embodiment, the cellular communication network is a Long Term Evolution (LTE) network, the connected wireless device is a User Equipment (UE), the radio access node is an Evolved Node B (eNB) and the one or more access control parameters are LTE access barring parameters read from System Information Block (SIB) messages broadcasted by the eNB.

In one embodiment, the one or more access control parameters are read whenever a paging message broadcasted by the radio access node indicates a change in the one or more access control parameters.

In one embodiment, the new service request is received through an application layer unit of the wireless device.

In one embodiment the method further comprises initiating at least one of one or more bearer setup procedures and one or more bearer modification procedures if a set of barring criteria are met.

In one embodiment, a wireless device connected with a radio access node within a cellular communications network is provided. The wireless devices comprises a wireless transceiver, a processor and memory containing software executable by the processor whereby the radio access node is operative to receive a new service request and perform an access control procedure for the service request, wherein performing the access control procedure comprises reading from the network one or more access control parameters associated with the status of the network and either allowing or barring a new connection for the new service depending on the status of the network. In one embodiment, the one or more access control parameters are read whenever a flag within a paging message broadcasted by the radio access node indicates a change in the one or more access control parameters.

In another embodiment, a wireless device comprising a wireless transceiver and a New Service Request (NSR) module is provided. The NSR module includes a new service request reading module for reading new service requests, an access parameters reading module for obtaining access control parameters indicating the status of the network and an access control procedure module for performing an access control procedure for the new service request based on further processing of the access control parameters.

In one embodiment, a method of operation of a radio access node in a cellular communications network is provided. The method comprises broadcasting a paging message comprising an access control information modification flag and setting the access control information modification flag to indicate a change within at least one of a plurality of access control parameters associated with said radio access node.

### Brief Description of the Drawing Figures

The accompanying drawing figures incorporated in and forming a part of this specification illustrate several aspects of the disclosure, and together with the description serve to explain the principles of the disclosure.
Figure 1 illustrates a conventional wireless communication network;
Figure 2 illustrates a flow chart of a method of operating a wireless device according to one comparative example;
Figure 3 illustrates a flow chart of a method of operating a User Equipment according to another embodiment of the present disclosure;
Figure 4A illustrates a block diagram of a User Equipment according to one embodiment of the present disclosure;
Figure 4B illustrates a block diagram of a User Equipment according to another embodiment of the present disclosure;
Figure 5A illustrates a block diagram of a radio access node according to one embodiment of the present disclosure;
Figure 5B illustrates a block diagram of a radio access node according to another embodiment of the present disclosure;

### Detailed Description

The embodiments set forth below represent information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the accompanying claims.

The proposed embodiments allow a network to improve the level of network resources used due to additional service requests from a connected user device. Particular embodiments, allow the network to improve its capacity by avoiding connection setup attempts by a connected user device when the network access node(s) connecting the device to the network is (are) congested. By having user devices in connected mode applying access control procedures accounting for congestion levels of the network access node(s) as described in this specification, new connection attempts may be barred, which saves signaling resources and time for admission control modules involved in setting up the connections.

In one embodiment, a method of operation of a wireless device connected to a radio access node in a cellular communications network, where the connection is established with respect to a first service, is provided. The method comprises receiving a new service request and performing an access control procedure for the service request. Performing the access control procedure comprises reading from the network one or more access control parameters associated with the status of the network and either allowing or barring a new connection for the new service depending on the status of the network.

In one embodiment, the one or more access control parameters comprise parameters indicating a congestion level of the radio access node.

In one embodiment, the method further comprises storing said access control parameters. In one embodiment, the reading and storing of the one or more access control parameters occurs periodically and wherein updated access control parameters are stored subsequent to each periodic reading. In another embodiment, the reading of the one or more access control parameters is subsequent to receiving a new service request. In one embodiment, the reading of the one or more access control parameters comprises selecting a set of access control parameters specific to the new service.

In one embodiment, the cellular communication network is a Long Term Evolution (LTE) network, the connected wireless device is a User Equipment (UE), the radio access node is an Evolved Node B (eNB) and the one or more access control parameters are LTE access barring parameters read from System Information Block (SIB) messages broadcasted by the eNB.

In one embodiment, the one or more access control parameters are read whenever a paging message broadcasted by the radio access node indicates a change in the one or more access control parameters.

In one embodiment, the new service request is received through an application layer unit of the wireless device.

In one embodiment the method further comprises initiating at least one of one or more bearer setup procedures and one or more bearer modification procedures if a set of barring criteria are met.

In one embodiment, a wireless device connected with a radio access node within a cellular communications network is provided. The wireless devices comprises a wireless transceiver, a processor and memory containing software executable by the processor whereby the radio access node is operative to receive a new service request and perform an access control procedure for the service request, wherein performing the access control procedure comprises reading from the network one or more access control parameters associated with the status of the network and either allowing or barring a new connection for the new service depending on the status of the network. In one embodiment, the one or more access control parameters are read whenever a flag within a paging message broadcasted by the radio access node indicates a change in the one or more access control parameters.

In another embodiment, a wireless device comprising a wireless transceiver and a New Service Request (NSR) module is provided. The NSR module includes a new service request reading module for reading new service requests, an access parameters reading module for obtaining access control parameters indicating the status of the network and an access control procedure module for performing an access control procedure for the new service request based on further processing of the access control parameters.

In one embodiment, a method of operation of a radio access node in a cellular communications network is provided. The method comprises broadcasting a paging message comprising an access control information modification flag and setting the access control information modification flag to indicate a change within at least one of a plurality of access control parameters associated with said radio access node.

As used herein, relational terms, such as "first" and "second," "top" and "bottom," and the like, may be used solely to distinguish one entity or element from another entity or element without necessarily requiring or implying any physical or logical relationship or order between such entities or elements.

In embodiments described herein, the joining term, "in communication with" and "connected to," and the like, may be used to indicate electrical or data communication, which may be accomplished by physical contact, induction, electromagnetic radiation, radio signaling, infrared signaling or optical signaling, for example. The above methods of achieving electrical or data communication are nonlimiting and mentioned only for illustration. One having ordinary skill in the art will appreciate that multiple components may interoperate and modifications and variations are possible of achieving the electrical and data communication.

In some of the embodiments described below, the network is a 3rd Generation Partnership Project (3GPP) Long Term Evolution (LTE) cellular network and, as such, LTE terminology is sometimes used. Note, however, that the embodiments disclosed herein may be applicable to other types of cellular communications networks as well as other networks.

As used herein, the terms "user device", "mobile device", "user equipment (UE)" can be used interchangeably and refer to computing platforms with wireless or wired connectivity, capable of running a wide-ranging variety of applications and services that are either pre-installed by the device manufacturer or are installed / downloaded by the user according to the user's specific usage requirements. The applications themselves may originate from a correspondingly wide-ranging group of software houses, manufacturers and 3rd party developers. Such user devices platforms may include mobile devices such as mobile telephones, 'smartphones', personal digital assistants, handheld or laptop computers, tablet computers and similar mobile devices having wireless communications connectivity, or similarly the user devices referred to herein could include fixed devices that are relatively immovable in normal use, such fixed devices having wireless connectivity to enable them to communicate using the wireless communications system. The user devices platforms may also include other device types comprising embedded communications connectivity, such as household appliances, utility meters and security and surveillance equipment, or consumer electronics devices such as still or video cameras, audio/visual entertainment equipment and gaming platforms.

In the present disclosure, the terms "radio access node", "Evolved or Enhanced Node B (eNB)", "base station", "relay station", "Remote Radio Unit (RRU)" can also be used interchangeably and refer to network nodes operable to provide radio access to user devices.

Furthermore, the term "bearer" may be replaced with the terms "connection" or in an LTE context or similar contexts. Such "bearers" or "connections" can be categorized by their information transfer characteristics, methods of accessing the service, inter-working requirements (to other networks) and other general attributes. Information characteristics include data transfer rate, direction(s) of data flow, type of data transfer (circuit or packet) and other physical characteristics. The access methods determine what parts of the system control could be affected by the bearer service. Some bearer must cross different types of networks (e.g. wireless and wired) and the data and control information may need to be adjusted depending on the type of network. Other general attributes might specify a minimum quality level for the service or special conditional procedures such as automatic re-establishment of a bearer after the service has been disconnected due to interference. Some categories of bearer available via the telephone system include synchronous and asynchronous data, packet data and alternate speech and data, video, multimedia, etc. However, while the term "service" is understood in some LTE standard specification, or other similar specifications" to be equivalent to the term "bearer" (or "bearer service", in the present disclosure the term "service" is to be understood in broader sense, such as from a user point of view, or from an application layer point of view. Some examples are starting a video game, watching a video, using Voice over LTE. Such "services" may translate (e.g. at layers lowers than an application layer) into one or more bidirectional radio and transport bearers. In this context, processing a new service request may trigger bearer setup procedures and/or bearer modification procedures. A bearer modification could be, for example, to lower the resources required or to increase the resources or to add or remove micro-flows. Bearer setup procedures and bearer modification procedures according to some embodiments of the present disclosure are described in 3GPP2 standard specifications 23.401 and 23.402.

In LTE, the assignment, configuration and release of connections and radio resources between a UE and a radio access node can be established via various protocols, such as the Radio Resource Control (RRC) protocol. The RRC protocol is described in detail in the 3GPP TS 36.331 v12.1.0 (2014-03) technical specification. There are the two basic RRC connection modes for a UE: "idle mode" (or RRCJDLE), and "connected mode" (or RRC_CONNECTED). Furthermore, an access control procedure is defined for idle mode (IM) UE's by the 36.331 v12.1 .0 (2014-03) specification. According to this access control procedure, whenever a service is requested by a UE in RRCJDLE, the UE reads a set of access control parameters broadcasted by radio access nodes within the network and applies the access control procedures as prescribed by the 36.331 v12.1.0 (2014-03) specification. Through this access control procedure, user devices in idle mode attempting to gain access to a network may be barred from using network resources so that other devices can be allowed access to prevent congestion and to control access to limited network resources. However, a UE in RRC_CONNECTED mode may initiate one or more bearer setup procedures and/or one or more bearer modification procedures, without going through an access control procedure similar to the one used in moving from RRCJDLE to RRC_CONNECTED. Nonetheless, if the radio access node is overloaded, the radio access node may reject the request using admission control. In such scenarios, signaling resources and admission control modules processing time are unnecessarily used.

To solve this problem, according to some of the embodiments disclosed herein, a connected user device performs an access control procedure whenever it has to provide one or more additional services that are distinct from the service for which the initial connection was established. Thus, as in the case of idle devices, the connected device can be barred from using additional network resources when such resources are scarce. For LTE and similar networks, the barring may occur before one or more bearer setup procedures and/or one or more bearer modification procedures are initiated due to the additional services requests.

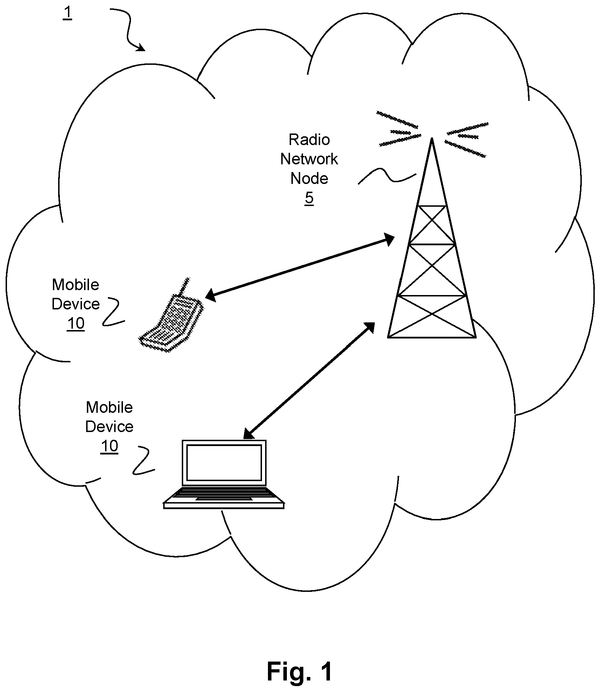

Referring to the drawing figures in which like reference designators refer to like elements, FIG. 1 illustrates a block diagram of an LTE network 1 in which a user equipment (UE) 10 is operated according to one embodiment of the present disclosure. The LTE network 1 includes a radio access node 5 that operates to provide radio access to User Equipment devices (UEs) 10.

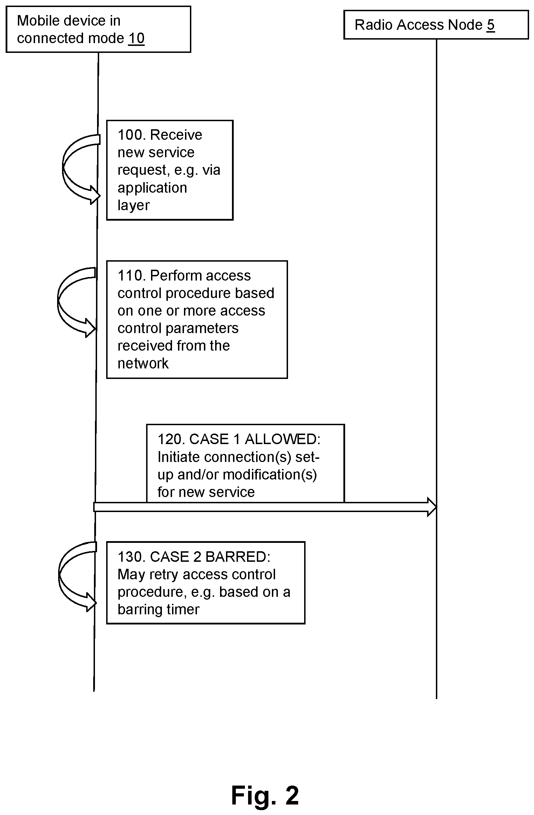

Referring to Figure 2, a method of operating a connected mobile device 10 according to a comparative example is disclosed. A connection to a radio access node 5 is established with respect to an initial service request. At step 100, the connected wireless device receives a request for a new service. This request may be received from a user or from an external device connected to the wireless device 10 and may be processed within the wireless device 10 via an application layer unit. At step 1 10, an access control procedure is performed. The access control procedure is based on one or more access parameters received from the network. The access parameters reflect the status of the network, such as congestion level of the radio access node to which the device is connected. The access control parameters can be obtained in one of the following ways:
(a) they may be received from the radio access node when the initial connection is established;
(b) they may be periodically retrieved and updated from messages broadcasted by the network access node 5; in such case, updated versions of the parameters would be available at the user device 10;
(c) they may be retrieved at the first opportunity for retrieval from messages broadcasted by the network access node 5 after the new service request is received by the user device 5.

For options (a) and (b), the one or more access parameters are stored until they are required for performing an access control procedure. Some examples of access control parameters include a "barring factor" and a "barring time". Access control parameters may be service specific. Access control parameters defined by 3GPP LTE will be described in detail later.

Depending on whether one or more barring criteria are met, the access control procedure may result in an indication that the network can provide an additional connection for the new service (CASE 1 : ALLOWED) or an indication that the network cannot provide an additional connection for the new service (CASE 2: BARRED). At step 120, in CASE 1 : ALLOWED, the wireless device 10 proceeds to request the network to set-up (or create) one or more new connections and/or modify existent connections for processing the new service. In the case of LTE, this request may include one or more bearer setup procedures and/or one or more bearer modification procedures. Optionally, in CASE 2: BARRED, the wireless device may repeat the access control procedure (step 130). The retry period is preferably based on a timer. In LTE, a timer called "AC Barring timer" is one of the access control parameters.

As noted above, the access control parameters can be obtained from the network in various ways. According to a preferred embodiment, a flag is set within a paging message broadcasted by the radio access node 5 to indicate whether the access control parameters have been modified since the initial connection with the wireless device 10. In this case, whenever the flag is set to indicate a change in the parameters, the wireless device 10 updates and stores the access control parameters required to process a new service request.

According to an alternate embodiment, in order to minimize memory storage requirements, the wireless device may be set such that it only reads the necessary access control parameters specific to the new service requested, from the paging message received from the radio access node, once the actual new service request is made, as per (c) above.

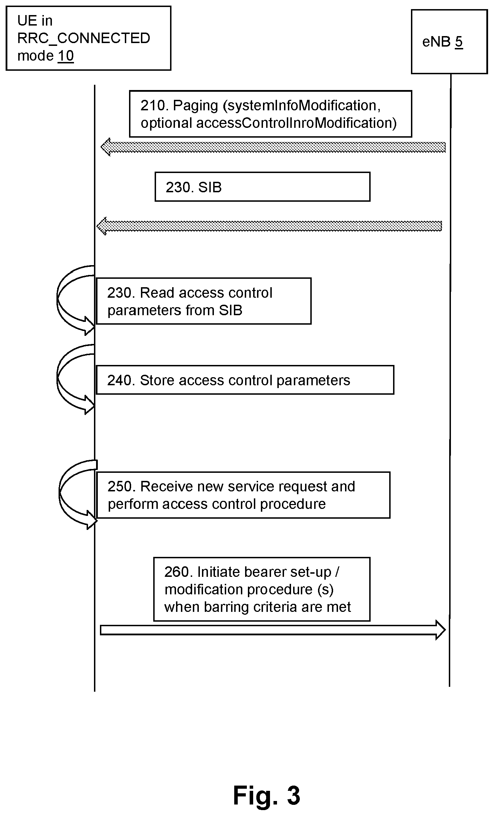

Figure 3 illustrates a flow chart of a method of operating a UE 10 in an RRC_CONNECTED state according to one embodiment. The method may comprise one or more of the following:
Step 210. The UE 10 reads the paging messages from the eNB 5 in a similar way to the UEs in RRCJDLE state; As noted earlier, according to an embodiment of the present disclosure, a paging message from the radio access node to the mobile device may be changed to include an optional flag to indicate that the access control information has changed. An access control paging flag may allow the UE to make more efficient the access control parameter retrieval process. The access control information does not change very often during uncongested periods. Separating the access control parameters means that the UE won't re-read the access control parameters unless a new ac flag is present.
Step 220. The UE 10 receives from the eNB 5 System Information Block (SIB) signals;
Step 230. If an access control modification flag (also referred herein as ac flag or accessControllnfoModification flag) is included in the paging message with a value set to true, the UE then reads the next system information parameters from System Information Block (SIB) signals. The UE reads the access parameters from the system information messages. In the case of an LTE network, if the UE does not support the ac flag, the flag system InfoModification used in current systems can be used instead.
Step 240. The UE stores the access parameters for later use.
Step 250. When the UE receives a request for a new service the UE follows the access control procedure of a UE in RRCJDLE mode (e.g. as set in TS 36.331 v12.1 .0 (2014-03)) for the access type relevant to the new service request. This may include any subset of the following:
   - apply the access control parameter set that corresponds to the service type being requested. For example, ssac- BarringForMMTEL-Video-r9 can be used for a GBR IMS-based video service, while ac-BarringForMO-Data can be used for a best effort non-GBR service;
   - start a barring timer (AC Barring Timer) when access is barred for the new service;
   - retry the access control procedures while in connected state and after the barring timer has expired from a previous barred access try;
Step 260. The UE initiates one or more bearer setup procedures and/or one or more bearer modification procedures, as needed by the new service when barring criteria are met.

Access parameters (or access control parameters) reflect a status of the network. Barring criteria are set based on these parameters to bar connection set-up attempts in unfavorable conditions, e.g. high congestion.

According to this embodiment, a UE in connected mode decodes barring parameters from SIB signals (specifically SIB2, a subset of SIB), and does not initiate one or more bearer setup procedures and/or one or more bearer modification procedures, as needed for processing the new service within the network, if certain barring criteria are not met. This helps to reduces the access load on eNB in a proactive way

The access control procedure for a UE in RRCJDLE mode, is described next. To manage congestion levels in a cell of a telecommunications network, 3GPP utilizes an access control barring factor and an access control barring time. The barring factor, also known as the "ac-BarringFactor" is a number between 0.00 and 1.00 that indicates a point of reference that the UE should use when executing the network access procedures. Of note, 3GPP defines several sets of barring factor and barring time combinations for various types of traffic and services. There may be a set of barring factor and barring time combinations for each access type for every time period. The access control procedure used by a UE in RRCJDLE mode includes generating, by the idle UE, a random number. The generated random number is compared against the barring factor, e.g., ac-BarringFactor and, if the random number is less than the barring factor e.g., as the ac-BarringFactor defined in TS 36.331 v12.1.0 (2014-03)), the idle UE is granted access. If, however, the random number is greater than or equal to the random number, the idle UE must wait, i.e., is barred from retrying, for at least the specified barring time. Once the barring time has expired, the idle UE can once again attempt to access the cell of the telecommunication network by performing the network access procedures.

Different access types defined in TS 36.331 v12.1 .0 (2014-03), are: { ac-BarringForMO-Signalling, ac-BarringForMO-Data, ssac-BarringForMMTEL-Voice-r9, ssac-BarringForMMTEL-Video-r9 , ac-BarringForCSFB-r10}.

Each access type, as defined in TS 36.331 v12.1 .0 (2014-03), has the following set of access parameters (also referred herein as barring parameters):

```
 AC-BarringConfig ::= SEQUENCE {
 ac-BarringFactor ENUMERATED {
                                p00, p05, p10, p15, p20, p25, p30, p40, p50, p60,
 p70, p75, p80, p85, p90, p95},
 ac-BarringTime ENUMERATED {s4, s8, s16, s32, s64, s128, s256, s512}, ac-
 BarringForSpecialACBIT STRING (SIZE(5))}
```

An example of a paging message from the eNB to a UE modified to include a flag, denoted herein 'accessControlinfoModification', may look as follows:

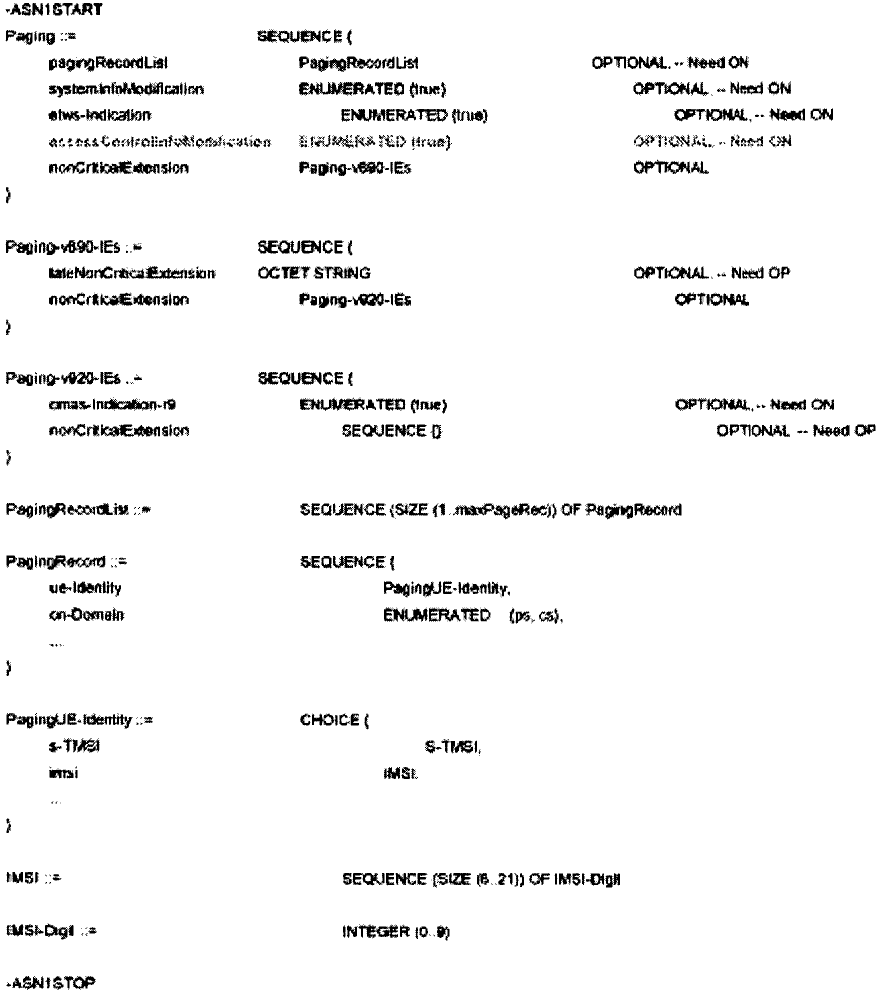

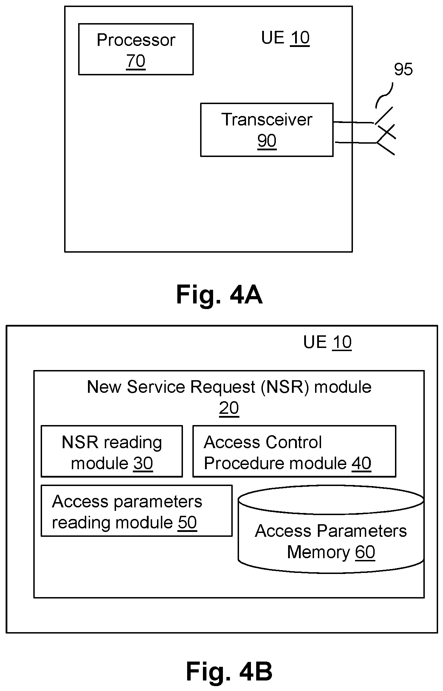

Figure 4A is a block diagram of the UE 10 of Figure 1 according to one embodiment of the present disclosure. Note, however, that this description is more generally applicable to any wireless device 10. As illustrated, the UE 10 includes a processor 70, a memory, and a wireless transceiver 90 coupled to one or more antennas 95. In general, the UE 10 operates according to any of the embodiments described above. In one embodiment, the functionality of the UE 10 discussed above is implemented in software stored in the memory that is executable by the processor 70 whereby the UE 10 operates according to any of the embodiments described above.

Figure 4B is a block diagram of the UE 10 of Figure 1 according to another embodiment of the present disclosure. Again, note that this description is more generally applicable to any wireless device 10. As illustrated, the UE 10 includes a New Service Request (NSR) module 20. The NSR module 20 comprises a new service request reading module 30, an access control procedure module 40 and an access parameters reading module 50. According to some embodiments, the NSR module 20 may also comprise an access parameters memory 60. After a connection to a radio access node is established with respect to an initial service request, an additional service request is processed by the device 10 within the NSR module 10 as follows: new service request reading module 30 receives the new service request and the access control procedure module 40 performs an access control procedure for the new service request based on further processing of the access control parameters obtained by the access control parameters reading module 50. As previously indicated, the access control parameters can be obtained in one of the following ways: (a) they may be received from the radio access node when the initial connection is established; (b) they may be periodically retrieved and updated from messages broadcasted by the network access node 5; in such case, updated versions of the parameters would be available at the UE 10; (c) they may be retrieved at the first opportunity for retrieval from messages broadcasted by the network access node 5 after the new service request is received by the user device 5. For options (a) and (b), the one or more access parameters are stored within the access parameters memory 60 until they are required for performing an access control procedure.

The new service request can be received for example from an application manager, operating system controller or manager function, the NAS (non-access stratum) level or at an AS (access stratum) level such as the RRC, MAC or physical layer level with inputs from user plane entities, or from device input/output functions, from radio receiver or signal processing functions or from applications. According to one embodiment, the new service request is received from the application layer.

In one embodiment, a computer program including instructions which, when executed by at least one processor, causes the at least one processor to carry out the functionality of the UE 10 according to any one of the embodiments described herein is provided. In one embodiment, a carrier containing the aforementioned computer program product is provided. The carrier is one of an electronic signal, an optical signal, a radio signal, or a computer readable storage medium (e.g., a non-transitory computer readable medium such as the memory 62).

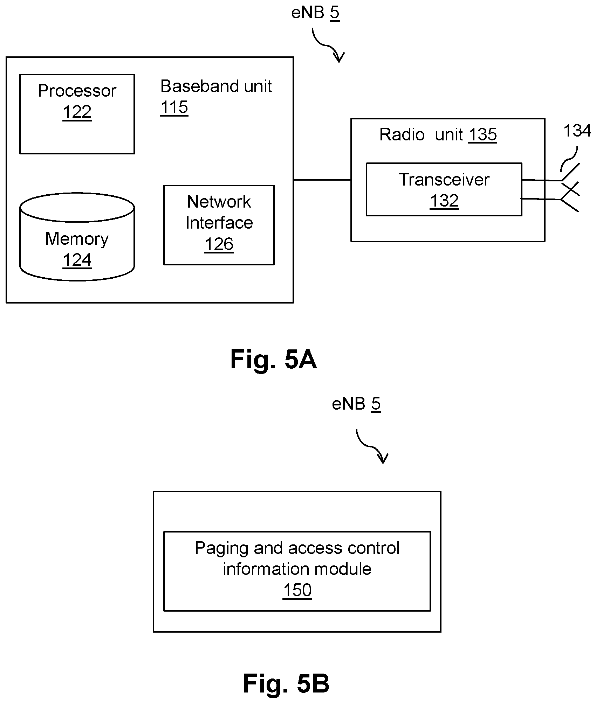

Figure 5A is a block diagram of the eNB 5 of Figure 3 according to one embodiment of the present disclosure. Note, however, that this description is more generally applicable to any radio access node. As illustrated, the eNB 5 includes a baseband unit 115 including a processor 122, memory 124, and a network interface 126, and a radio unit 135 including a wireless transceiver 132 coupled to one or more antennas 134. In general, the eNB 5 operates according to any of the embodiments described above. In one embodiment, the functionality of the eNB 5 discussed above is implemented in software stored in the memory 124 that is executable by the processor 122 whereby the eNB 5 operates according to any of the embodiments described above.

Figure 5B is a block diagram of the eNB 5 of Figure 3 according to one embodiment of the present disclosure. Again, note that this description is more generally applicable to any radio access node. As illustrated, the eNB 5 includes a paging and access control information module 150 which is implemented in software that is executable by a processor to cause the eNB 5 to operate according to any of the embodiments described above. In general, the paging and access control information module 150 operates to broadcast paging messages and access control information to devices including UE 5, the system information being associated with system information, including status of the eNB 5. The paging and access control information module 150 then operates to transmit paging messages and SIB messages to the wireless device, as described above.

In one embodiment, a computer program including instructions which, when executed by at least one processor, causes the at least one processor to carry out the functionality of the eNB 5 according to any one of the embodiments described herein is provided. In one embodiment, a carrier containing the aforementioned computer program product is provided. The carrier is one of an electronic signal, an optical signal, a radio signal, or a computer readable storage medium (e.g., a non-transitory computer readable medium such as the memory 124).

Some embodiments disclosed herein provide a wireless device and method such that an access control procedures is performed by the device while in connected state and upon receiving a new service request.

Advantageously, some disclosed methods and devices allow the use of network resources associated with setting up additional connections while the device is already connected to be improved.

Furthermore, methods and devices according to some disclosed embodiments allow for optimizing the reading and storage of access control parameters at the wireless device side by the addition of dedicated access control flag to indicated new access control data.

The following acronyms are used throughout this disclosure.
- 3GPP: 3rd Generation Partnership Project
- eNB: Enhanced or Evolved Node B
- LTE: Long Term Evolution
- RRC: Radio Resource Control
- RRU: Remote Radio Unit
- SIB: System Information Block
- TS: Technical Specification
- UE: User Equipment

Those skilled in the art will recognize improvements and modifications embodiments of the present disclosure. All such improvements and modifications are considered within the scope of the claims that follow.

## Claims

1. A method of operation of a User Equipment, UE, (10) connected to an evolved NodeB, eNB, (5) in a Long Term Evolution, LTE, network (1), wherein the UE is in the Radio Resource Control_Connected, RRC_CONNECTED, mode and the connection is established with respect to a first service, the method comprising:
receiving (250) a new service request;
performing (260) an access control procedure for the service request whenever the UE has to provide one or more additional services that are distinct from a service for which an initial connection was established, wherein performing the access control procedure comprises reading from the network one or more access control parameters associated with the status of the network and either allowing or barring a new connection for the new service depending on the status of the network, wherein the one or more access control parameters are LTE access barring parameters read from System Information Block, SIB, messages broadcasted by the eNB; and
initiating (260) at least one of one or more bearer setup procedures and one or more bearer modification procedures if a set of barring criteria are met.

2. The method of claim 1, wherein the one or more access control parameters comprise parameters indicating a congestion level of the eNB.

3. The method of claim 1, further comprising storing (240) said access control parameters.

4. The method of claim 3, wherein the reading and storing of the one or more access control parameters occurs periodically and wherein updated access control parameters are stored subsequent to each periodic reading.

5. The method of claim 2, wherein the reading of the one or more access control parameters is subsequent to receiving a new service request.

6. The method of claim 5, wherein the reading of the one or more access control parameters comprises selecting a set of access control parameters specific to the new service.

7. The method of claim 1, wherein:
- the one or more access control parameters are read whenever a flag within a paging message broadcasted by the eNB indicates a change in the one or more access control parameters; or
- the new service request is received from an application layer unit of the UE.

8. The method of claim 1, further comprising:
broadcasting (210) a paging message comprising an access control information modification flag;
setting the access control information modification flag to indicate a change within at least one of a plurality of access control parameters associated with said eNB.

9. A computer program comprising instructions which, when executed on at least one processor (70, 122), cause the at least one processor to carry out the method according to any one of claims 1 to 8.

10. A carrier containing the computer program of claim 9, wherein the carrier is one of an electronic signal, an optical signal, a radio signal, or a computer readable storage medium.

11. A User Equipment, UE, (10) connected with an evolved NodeB, eNB, (5) within a Long Term Evolution, LTE, network (1), wherein the UE is in the Radio Resource Control_Connected, RRC_CONNECTED, mode, comprising:
a wireless transceiver (90);
a processor (70); and
memory containing software executable by the processor (70) whereby the eNB (5) is operative to:
- receive a new service request;
- perform an access control procedure for the service request whenever the UE has to provide one or more additional services that are distinct from a service for which an initial connection was established, wherein performing the access control procedure comprises reading from the network (1) one or more access control parameters associated with the status of the network (1) and either allowing or barring a new connection for the new service depending on the status of the network, wherein the one or more access control parameters are LTE access barring parameters read from System Information Block, SIB, messages broadcasted by the eNB; and
- initiate at least one of one or more bearer setup procedures and one or more bearer modification procedures if a set of barring criteria are met.

12. The UE (10) of claim 11 wherein the one or more access control parameters are read whenever a flag within a paging message broadcasted by the eNB (5) indicates a change in the one or more access control parameters.

13. The UE (10) of claim 11, further comprising:
a New Service Request, NSR, module comprising:
- a new service request reading module (30) configured to read new service requests;
- an access parameters reading module (50) configured to obtain access control parameters indicating the status of the network; and
- an access control procedure module (40) for performing an access control procedure for the new service request based on further processing of the access control parameters.

## Patentansprüche

1. Betriebsverfahren für eine Benutzereinrichtung, UE, (10), die mit einem evolvierten Knoten B, eNB, (5) in einem Long Term Evolution, LTE,-Netzwerk (1) verbunden ist, wobei die UE im Modus Funkressourcensteuerung_Verbunden, RRC_CONNECTED, ist, und die Verbindung in Bezug auf einen ersten Dienst hergestellt wird, wobei das Verfahren umfasst:
Empfangen (250) einer Anforderung eines neuen Dienstes;
Durchführen (260) einer Zugangskontrollprozedur für die Dienstanforderung, wann immer die UE einen oder mehrere zusätzliche Dienste bereitzustellen hat, die sich von einem Dienst unterscheiden, für welchen eine anfängliche Verbindung hergestellt wurde, wobei das Durchführen der Zugangskontrollprozedur ein Auslesen eines oder mehrerer Zugangskontrollparameter vom Netzwerk umfasst, die mit dem Status des Netzwerks assoziiert sind und in Abhängigkeit vom Status des Netzwerks entweder eine neue Verbindung für den Dienst erlauben oder sperren, wobei der eine oder die mehreren Zugangskontrollparameter LTE-Zugangssperrparameter sind, die aus Systeminformationsblock, SIB,-Nachrichten ausgelesen werden, die vom eNB per Broadcast gesendet werden; und
Einleiten (260) mindestens einer von einer oder mehreren Trägeraufbauprozeduren und einer oder mehreren Trägermodifikationsprozeduren, wenn ein Satz von Sperrkriterien erfüllt wird.

2. Verfahren nach Anspruch 1, wobei der eine oder die mehreren Zugangskontrollparameter Parameter umfassen, die eine Überlaststufe des eNBs anzeigen.

3. Verfahren nach Anspruch 1, ferner umfassend ein Speichern (240) der Zugangskontrollparameter.

4. Verfahren nach Anspruch 3, wobei das Auslesen und Speichern des einen oder der mehreren Zugangskontrollparameter periodisch erfolgt, und wobei aktualisierte Zugangskontrollparameter nach jedem periodischen Auslesen gespeichert werden.

5. Verfahren nach Anspruch 2, wobei das Auslesen des einen oder der mehreren Zugangskontrollparameter auf den Empfang einer Anforderung eines neuen Dienstes folgt.

6. Verfahren nach Anspruch 5, wobei das Auslesen des einen oder der mehreren Zugangskontrollparameter ein Auswählen eines Satzes von Zugangskontrollparametern umfasst, die für einen neuen Dienst spezifisch sind.

7. Verfahren nach Anspruch 1, wobei:
- der eine oder die mehreren Zugangskontrollparameter ausgelesen werden, wann immer ein Flag innerhalb einer Funkrufnachricht, die vom eNB per Broadcast gesendet wird, eine Änderung des einen oder der mehreren Zugangskontrollparameter anzeigt; oder
- die Anforderung des neuen Dienstes von einer Anwendungsschichteinheit der UE empfangen wird.

8. Verfahren nach Anspruch 1, ferner umfassend:
Senden per Broadcast (210) einer Funkrufnachricht, die ein Zugangskontrollinformations-Modifikationsflag umfasst;
Setzen des Zugangskontrollinformations-Modifikationsflags, um eine Änderung mindestens eines von einer Mehrzahl von Zugangskontrollparametern anzuzeigen, die mit dem eNB assoziiert ist.

9. Computerprogramm, umfassend Anweisungen, die bei Ausführung auf mindestens einem Prozessor (70, 122) den mindestens einen Prozessor zum Durchführen des Verfahrens nach einem der Ansprüche 1 bis 8 veranlassen.

10. Datenträger, der das Computerprogramm nach Anspruch 9 enthält, wobei der Datenträger eines von einem elektronischen Signal, einem optischen Signal, einem Funksignal oder einem computerlesbaren Speichermedium ist.

11. Benutzereinrichtung, UE, (10), die mit einem evolvierten Knoten B, eNB, (5) in einem Long Term Evolution, LTE,-Netzwerk (1) verbunden ist, wobei die UE im Modus Funkressourcensteuerung_Verbunden, RRC_CONNECTED, ist und umfasst:
einen drahtlosen Sendeempfänger (90);
einen Prozessor (70); und
einen Speicher, der Software enthält, die vom Prozessor (70) ausgeführt werden kann, wodurch der eNB (5) ausgelegt ist zum:
- Empfangen einer Anforderung eines neuen Dienstes;
- Durchführen einer Zugangskontrollprozedur für die Dienstanforderung, wann immer die UE einen oder mehrere zusätzliche Dienste bereitzustellen hat, die sich von einem Dienst unterscheiden, für welchen eine anfängliche Verbindung hergestellt wurde, wobei das Durchführen der Zugangskontrollprozedur ein Auslesen eines oder mehrerer Zugangskontrollparameter vom Netzwerk (1) umfasst, die mit dem Status des Netzwerks (1) assoziiert sind und in Abhängigkeit vom Status des Netzwerks entweder eine neue Verbindung für den Dienst erlauben oder sperren, wobei der eine oder die mehreren Zugangskontrollparameter LTE-Zugangssperrparameter sind, die aus Systeminformationsblock, SIB,-Nachrichten ausgelesen werden, die vom eNB per Broadcast gesendet werden; und
- Einleiten mindestens einer von einer oder mehreren Trägeraufbauprozeduren und einer oder mehreren Trägermodifikationsprozeduren, wenn ein Satz von Sperrkriterien erfüllt wird.

12. UE (10) nach Anspruch 11, wobei der eine oder die mehreren Zugangskontrollparameter ausgelesen werden, wann immer ein Flag innerhalb einer Funkrufnachricht, die vom eNB (5) per Broadcast gesendet wird, eine Änderung des einen oder der mehreren Zugangskontrollparameter anzeigt.

13. UE (10) nach Anspruch 11, ferner umfassend:
ein Modul zur Anforderung neuer Dienste, NSR, das umfasst:
- ein Modul (30) zum Auslesen von Anforderungen neuer Dienste, das zum Auslesen von Anforderungen neuer Dienste konfiguriert ist;
- ein Zugangsparameterauslesemodul (50), das so konfiguriert ist, dass es Zugangskontrollparameter abruft, die den Status des Netzwerks anzeigen; und
- ein Zugangskontrollprozedurmodul (40) zum Durchführen einer Zugangskontrollprozedur für die Anforderung des neuen Dienstes basierend auf Weiterverarbeitung der Zugangskontrollparameter.

## Revendications

1. Procédé de fonctionnement d'un équipement d'utilisateur, UE, (10) connecté à un nœud B évolué, eNB, (5) dans un réseau d'évolution à long terme, LTE, (1), dans lequel l'UE est dans le mode de commande de ressources radio connecté, RRC_CONNECTED, et la connexion est établie en ce qui concerne un premier service, le procédé comprenant :
la réception (250) d'une nouvelle demande de service ;
la réalisation (260) d'une procédure de commande d'accès pour la demande de service chaque fois que l'UE doit fournir un ou plusieurs services supplémentaires qui sont distincts d'un service pour lequel une connexion initiale a été établie, dans lequel la réalisation de la procédure de commande d'accès comprend la lecture, depuis le réseau, d'un ou plusieurs paramètres de commande d'accès associés au statut du réseau et soit l'autorisation soit l'interdiction d'une nouvelle connexion pour le nouveau service en fonction du statut du réseau, dans lequel les un ou plusieurs paramètres de commande d'accès sont des paramètres d'interdiction d'accès LTE lus depuis des messages de bloc d'informations de système, SIB, diffusés par l'eNB ; et
le lancement (260) d'au moins l'une d'une ou plusieurs procédures de configuration de support et d'une ou plusieurs procédures de modification de support si un ensemble de critères d'interdiction sont remplis.

2. Procédé selon la revendication 1, dans lequel les un ou plusieurs paramètres de commande d'accès comprennent des paramètres indiquant un niveau d'encombrement de l'eNB.

3. Procédé selon la revendication 1, comprenant en outre la mémorisation (240) desdits paramètres de commande d'accès.

4. Procédé selon la revendication 3, dans lequel la lecture et la mémorisation des un ou plusieurs paramètres de commande d'accès se déroulent périodiquement et dans lequel des paramètres de commande d'accès mis à jour sont mémorisés à la suite de chaque lecture périodique.

5. Procédé selon la revendication 2, dans lequel la lecture des un ou plusieurs paramètres de commande d'accès est à la suite de la réception d'une nouvelle demande de service.

6. Procédé selon la revendication 5, dans lequel la lecture des un ou plusieurs paramètres de commande d'accès comprend la sélection d'un ensemble de paramètres de commande d'accès spécifiques au nouveau service.

7. Procédé selon la revendication 1, dans lequel :
- les un ou plusieurs paramètres de commande d'accès sont lus lorsqu'un drapeau à l'intérieur d'un message de radiomessagerie diffusé par l'eNB indique un changement des un ou plusieurs paramètres de commande d'accès ; ou
- la nouvelle demande de service est reçue en provenance d'une unité de couche d'application de l'UE.

8. Procédé selon la revendication 1, comprenant en outre :
la diffusion (210) d'un message de radiomessagerie comprenant un drapeau de modification d'informations de commande d'accès ;
le réglage du drapeau de modification d'informations de commande d'accès pour indiquer un changement à l'intérieur d'au moins l'un d'une pluralité de paramètres de commande d'accès associés audit eNB.

9. Programme informatique comprenant des instructions qui, lorsqu'elles sont exécutées sur au moins un processeur (70, 122), amènent l'au moins un processeur à effectuer le procédé selon l'une quelconque des revendications 1 à 8.

10. Porteuse contenant le programme informatique selon la revendication 9, dans laquelle la porteuse est l'un d'un signal électronique, d'un signal optique, d'un signal radio ou d'un support de mémorisation lisible par ordinateur.

11. Equipement d'utilisateur, UE, (10) connecté à un nœud B évolué, eNB, (5) dans un réseau d'évolution à long terme, LTE, (1), dans lequel l'UE est dans le mode de commande de ressources radio connecté, RRC_CONNECTED, comprenant :
un émetteur-récepteur sans fil (90) ;
un processeur (70) ; et
une mémoire contenant un logiciel exécutable par le processeur (70) de telle manière que l'eNB (5) soit opérationnel pour :
- la réception d'une nouvelle demande de service ;
- la réalisation d'une procédure de commande d'accès pour la demande de service chaque fois que l'UE doit fournir un ou plusieurs services supplémentaires qui sont distincts d'un service pour lequel une connexion initiale a été établie, dans lequel la réalisation de la procédure de commande d'accès comprend la lecture, depuis le réseau (1), d'un ou plusieurs paramètres de commande d'accès associés au statut du réseau (1) et soit l'autorisation soit l'interdiction d'une nouvelle connexion pour le nouveau service en fonction du statut du réseau, dans lequel les un ou plusieurs paramètres de commande d'accès sont des paramètres d'interdiction d'accès LTE lus depuis des messages de bloc d'informations de système, SIB, diffusés par l'eNB ; et
- le lancement d'au moins l'une d'une ou plusieurs procédures de configuration de support et d'une ou plusieurs procédures de modification de support si un ensemble de critères d'interdiction sont remplis.

12. UE (10) selon la revendication 11, dans lequel les un ou plusieurs paramètres de commande d'accès sont lus chaque fois qu'un drapeau à l'intérieur d'un message de radiomessagerie diffusé par l'eNB (5) indique un changement des un ou plusieurs paramètres de commande d'accès.

13. UE (10) selon la revendication 11, comprenant en outre :
un module de nouvelle demande de service, NSR, comprenant :
- un module de lecture de nouvelle demande de service (30) configuré pour la lecture de nouvelles demandes de service ;
- un module de lecture de paramètres d'accès (50) configuré pour l'obtention de paramètres de commande d'accès indiquant le statut du réseau ; et
- un module de procédure de commande d'accès (40) pour la réalisation d'une procédure de commande d'accès pour la nouvelle demande de service sur la base d'un autre traitement des paramètres de commande d'accès.
